# EUROPÄISCHE PATENTANMELDUNG

(11) **EP 1 001 563 A2**
(43) Veröffentlichungstag der Anmeldung: **17.05.2000**
(21) Anmeldenummer: 99440303.8
(22) Anmeldetag: 05.11.1999
(51) Int. Cl.: H04B 10/17, H04B 10/18

(54) **Modul zur Übertragung von optischen Signalen**

(30) Priorität: 13.11.1998 DE 19852332
(71) Anmelder: ALCATEL, 75008 Paris (FR)
(72) Erfinder: Wedding, Berthold, Dr., 70825 Korntal-Münchingen (DE); Fussgänger, Kurt, Dr., 71686 Remseck (DE)
(74) Vertreter: Rausch, Gabriele, Dr.

(57) **Zusammenfassung**

Es wird ein Übertragungsmodul für die Übertragung von optischen Signalen über hohe Distanzen vorgeschlagen, wobei mehrere Übertragungsmodule 10 mit einander verbunden sind und der jeweilige Empfänger eines Übertragungsmoduls einen 3R Regenerator aufweist.

## Beschreibung

Die Erfindung geht aus von einem Übertragungsmodul für die Übertragung von optischen Signalen über hohe Distanzen nach der Gaffung des Hauptanspruchs.
Für die Übertragung großer Datenraten müssen die Übertragungssysteme spezielle Funktionen aufweisen, um die Übertragung der Datenraten, es handelt sich dabei um Raten jenseits von 100 Gbit/s über große Entfernungen, wir reden dabei von über 10.000 km, zu gewährleisten. In der literatur werden für solche Hochgeschwindigkeits- und Hochdistanz-Systeme verschiedene Möglichkeiten vorgeschlagen. Ein -Bespiel ist in der Veröffentlichung "170 Gbit/s Transmission over 10850 km using Large Core Transmission Fibre", M. Suzuki et al, OFC 98, Post Deadline Paper No. 17. Hierin wird eine Übertragung von 170 Gbit/s mit Hilfe eines WDM (wavelenght-division-multiplex) Verfahrens beschrieben. Dabei werden alternativ 32 oder 16 Kanäle verwendet. Um Probleme mit Nichtlinearitäten des optischen Signals bei der Übertragung über die optische Faser zu reduzieren wird in dieser Veröffentlichung eine spezielle Faser vorgeschlagen. In der Übertragungsstrecke sind in einem Abstand von etwa 50 km jeweils optischer Faserverstärker eingebaut. Um die Dispersionseffekte zu mildern, werden Faserstücke mit einer negativen Dispersion mit Faserstücken mit positiven Dispersionen kombiniert. Das Problem bei einem solchen Übertragungssystem besteht darin, daß durch die Aneinanderreihung von optischen Faserverstärkern in der Übertragungskette analoge Verstärker in Serie geschaltet sind, so daß sich durch zunehmendes Rauschen Effekte aufaddieren, die zur Verschlechterung des Signals führen.

Das erfindungsgemäße Übertragungsmodul mit dem kennzeichnenden Merkmalen des Hauptanspruchs hat dem gegenüber den Vorteil, daß die Überlagerung des Signals durch die Rauscheffekte durch Einsatz von 3R-Regeneratoren abgeschwächt wird, und daher die Abstände zwischen den einzelnen Faser-Verstärkern größer gewählt werden können. Durch die Verwendung von 3R-Regeneratoren in den jeweiligen Empfängern der Module spart man etwa die Hälfte der optischen Faserverstärker ein, die ansonsten für die Übertragung über eine vergleichbare Strecke notwendig wären. Durch die Verbindung der Eigenschaften von Faserverstärkern mit den Eigenschaften von 3R-Regeneratoren wird ein Übertragungsmodul geschaffen, das auf einfache Art und Weise mit weiteren Modulen verbunden und an die jeweilige Übertragungsaufgabe anpaßbar ist.

Durch die in den Unteransprüchen angeführten Maßnahmen sind vorteilhafte Weiterbildungen und Verbesserungen des im Hauptanspruch angegebenen Übertragungsmodul möglich.

Besondern vorteilhaft ist es, die Übertragungsmodule mit einem Wellenlängenmultiplex-Verfahren zu kombinieren. Vorteilhafterweise wird in der Übertragungsstrecke Faserstücke eingesetzt, die unterschiedliche Dispersionseigenschaften aufweisen. Durch den Einsatz dieser Dispersionsfasern werden die negativen Effekte einer Vierwellenmischung verringert.
Insbesondere vorteilhaft ist esin einem ersten Teilstück eine Faser hoher positive Dispersion und in einem zweiten Teilstück eine Faser mit negativer Dispersion zu verwenden.

Vorteilhafterweise werden die optischen Faserverstärker in der Übertragungsstrecke über einen optischen Überwachungskanal überwacht.

Vorteilhafterweise wird in den letzten Empfänger in der Kette der Übertragungsmodule elektronische Filter eingebaut die es ermöglichen, die Daten zu rekonstruieren. Für die Rekonstruktion der Daten ist es weiterhin von Vorteil, wenn im letzten Empfänger in der Kette der Übertragungsmodule ein Eye-Monitoring-System eingebaut ist das die Auswertung der ankommenden Daten vereinfacht und die Übertragungsqualität überwacht. Um die unterschiedlichen Dispersionseffekte der unterschiedlichen Wellenlängen des Wellenlängenmultiplex auszugleichen, ist es von Vorteil vor dem eigentlichen Multipexer im Sender eine Vorverzerrung vorzusehen, die für die unterschiedlichen Wellenlängenkanäle unterschiedlich ausgelegt ist.
Eine weitere vorteilhafte Ausführungsform verwendet das DST (disporsion supported transmission) Verfahren, das unempfindlich gegen Faserdispersonen ist und einen einfachen Aufbau des Senders und des 3R-Regenerators ermöglicht.

Ein Ausführungsbeispiel der Erfindung ist in den Zeichnung dargestellt und in der nachfolgenden Beschreibung näher erläutert.

Es zeigt:
- Fig. 1: eine Keife von Übertragungsmodulen und
- Fig. 2: eine Ausbildungsform eines Übertragungsmoduls.

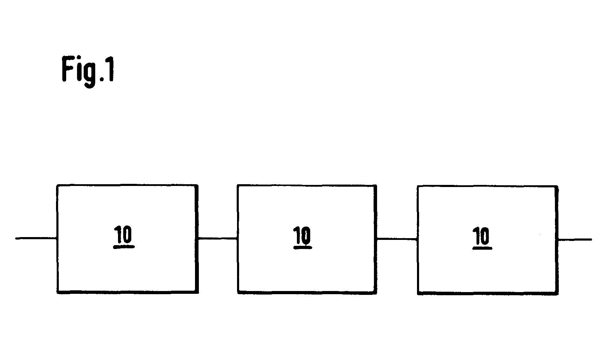

Fig. 1 zeigt schematisch den Aufbau einer Übertragungsstrecke aus mehreren Übertragungsmodulen 10. Dabei ist jeweils der Ausgang eines Übertragungsmodul 10 mit dem Eingang des nächsten Übertragungsmoduls verbunden. Eine Übertragungsstrecke mit Hilfe von Übertragungsmodulen zu überwinden ist auf einfache Weise möglich. Das Übertragungssystem selbst ist einfach skalierbar, d.h. es können kurze Streckenlängen beispielsweise in der Länge von 2.000 km oder auch 20.000 km Strecken nach dem gleichen Prinzip realisiert werden, ohne daß jeweils Optimierungen bezüglich Faserdispersion, Nichtlinearitäten, Faserverstärkerrauschen und Bandbreite nötig sind. Als Maßstab für die Auslegung für eine bestimmte Übertragungsstrecke gilt, daß sich die Bitfehlerraten der Einzelstrecken zwischen den 3R-Regeneratoren jeweils addieren. Das bedeutet, daß eine Übertragungsstrecke wie in Fig. 1 dargestellt, die drei Übertragungsmodule verwendet, eine Bitfehlerrate aufweist, die 3mal den Einzelbitfehlern des Übertragungsmodul 10 entspricht.

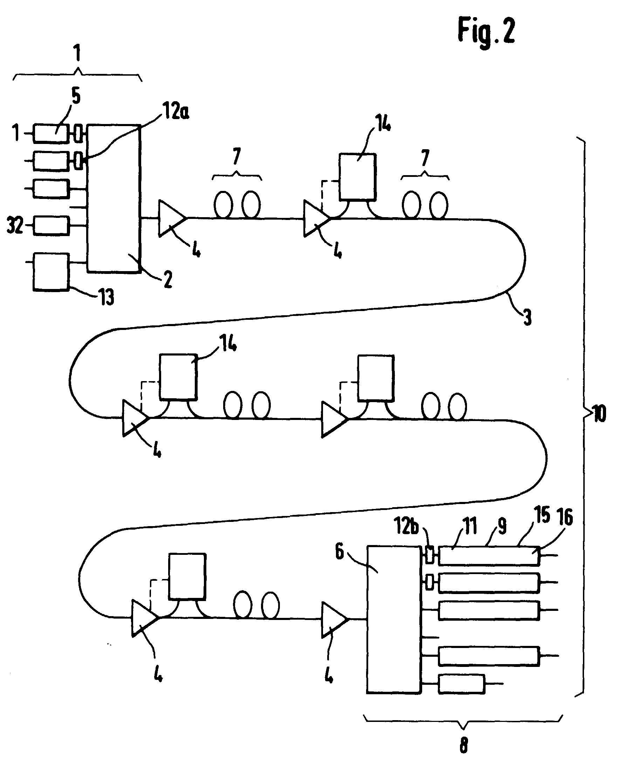

Fig. 2 zeigt eine Ausbildungsform eines Übertragungsmoduls 10. Das Modul weist einen Sender 1 auf. Im Sender sind Kanäle, hier beispielsweise 1 bis 32 angedeutet. Diese optischen Kanäle sind Träger der eigentlichen Information. Dargestellt ist pro Kanal ein elektrisch/optischer Wandler 5, der im allgemeinsten Fall eine optische Quelle enthält, die auf unterschiedliche Art und Weise moduliert wird. Der Ausgang des elektrisch/optischen Wandlers 5 ist mit einem Kompensator 12 verbunden.
Der Ausgang des Kompensators 12a liegt am Eingang eines Multiplexers 2 an. Der Multipexausgang des Multipexers 2 ist mit der Übertragungsstrecke 3 verbunden. Innerhalb der Übertragungsstrecke 3 befinden sich optische Faserverstärker 4. Zwischen den Faserverstärkern 4 sind jeweils Faserstücke 7 unterschiedlicher Dispersion eingebracht. Nach jedem Faserverstärker 4 ist ein Signalabzweig 14 vorhanden. Die Übertragungsstrecke 3 endet am Eingang eines Demultiplexers 6 im Empfänger 8. Die Ausgänge des Demultiplexers stellen wieder unterschiedliche Informationen pro Kanal dar.
Eventuell wir ein Kompensator 12b verwendet, um aufgeprägte Vorverzerrungen und Übertragungsverzerrungen zu kompensieren. Das Signal wird in einem optisch/elektrischen Wandler 15 zurückgewandelt und mit evnetuell einem Filter und/oder einem Eye-Monitoringsystem verbunden. Der Empfänger 8 weist zudem einen 3R Regenerator 16 auf.

Die optischen Signale der unterschiedlichen Kanäle werden im Sender 1 erzeugt und im Multipexer 2 zu einem gemeinsamen Datenstrom verbunden. Am Ausgang des Multiplexers 2 sitzt zunächst ein Faserverstärker 4, der das Ausgangssignal als Leistungsverstärker verstärkt und auf die Übertragungsstrecke 3 gibt. Nach jedem optischen Leistungsverstärker wird eine Faser mit großer Dispersion z.B. SMF mit 17ps/nm/km eingesetzt. Mit dieser hochdispersiven Faser wird die Vierwellenmischung zwischen den einzelen optischen Kanälen deutlich reduziert. Jeweils auf der zweiten Streckenhälfte ist die optische Leistung durch die Faserdämpfung, gesunken. Hier wird ein Faserstück mit geringer Dispersion z.B. -2 ps/nm/km zur teilweisen Dispersionskompensation eingesetzt. Es handelt sich bei diesen Faserstücken 7 jeweils um handelsübliche Fasern. Spezielle Entwicklungen, wie aus dem Stand der Technik bekannt sind nicht notwendig. Das optische Signal wird vom nächsten optischen Faserverstärker 4 verstärkt. Nachdem Faserverstärker ist ein Signalabzweig 14 für die Überwachungswellenlängen vorgesehen. Im Abzweig wird mit Hilfe der Überwachungswellenlänge die Funktion des Faserverstärkers 4 überprüft und seine Ansteuerung ggf. nachgeregelt. Das über mehrere Faserverstärker sowie Dispersionsfaserstücke 7 übertragene Signal wird im Empfänger 8 in den Demultiplexer 6 eingespeist. Die anschließend wieder aufgetrennten Kanäle durchlaufen einen 3R Regenerator, der sowohl die Amplitude des Signals (Regeneration), die Form des Signals (Reshaping), als auch die zeitliche Position des Signals (Retiming) wiederherstellt. Mit einem solchen 3R-Regenerator wird aus dem mit Rauschen belasteten Signalstrom wieder ein rekonstruierter Signalstrom erzeugt.

Eine besonders einfache Ausführungsform verwendet das DST Übertragungsverfahren. Der Vorteil besteht darin, daß der optische Sender für den Einsatz in einem DST Verfahren ein direkt modulierter Halbleiterlaser ist. Es ist dabei sehr wichtig, einen solchen einfachen Aufbau für die optischen Sender und für die 3R-Regeneratoren zu realisieren, besonders aber einen geringen Leistungsverbrauch im Auge zu behalten, insbesondere falls die Systeme für den unterseeischen Betrieb konzipiert werden. Jeder weitere Aufwand, wie er aus dem Stand der Technik für das Sendesystem bekannt, wie z.B. externer Datenmodulator, Taktamplitudenmodulator, Phasenmodulator verbraucht Energie und ist für für den gewünschten Zweck nicht so günstig. Auch die Elektronik des 3R-Regenerators kann durch Einsatz geeigneter Chip-Technologie z.B. SiGe-IC's auch für geringen Leistungsverbrauch ausgelegt werden. Weiterhin besitzen DST-Sendesignale eine große Toleranz bezüglich optischer Filterfunktionen wie sie in jedem WDM Koppler vorhanden sind. Diese Koppler müssen im Multiplexer verwendet werden, um den Signalstrom zu bündeln. Weiterhin lassen sich mit DST Sendesignale geringe Kanalabstände zwischen den optischen Kanälen realisieren. Da die DST Signale auch eine große Robustheit gegenüber Fasernichtlinearitäten wie Brillouineffekt und Selbstphasenmodulation aufweisen, ist der Einsatz höherer optischer Sendeleistungen pro Kanal möglich und damit das Übertragung von Signalen über eine größere Streckenlänge.

Bei Einsatz von DST Signalen kann wegen der großen Dispersionstoleranz zudem auf den Einsatz von Kompensatoren 12a und 12b verzichtet werden.
Eine weitere Ausführungsform verwendet für das Wellenlängenmultiplex jeweils orthogonale Wellenlängensignale für benachbarte Kanäle. Dies läßt sich durch den Einsatz von polarisationserhaltenden Fasern nach der Lichtquelle realisieren. Die Polarisation kann dabei durch Drehen eines Spleisses zum WDM Multiplexer hergestellt werden. Das Verwenden von benachbarten WDM Kanälen mit orthogonalen Polarisationen hat den Vorteil, daß die Vierwellenmischung weiter unterdrückt wird.

## Patentansprüche

1. Übertragungsmodul (10) für die Übertragung von optischen Signalen über hohe Distanzen mit einem Sender (1) und einem Empfänger (8) und einer Übertragungsstrecke (3), wobei in der Übertragungsstrecke (3) optische Verstärker (4) integriert sind, dadurch gekennzeichnet, daß der jeweilige Empfänger (8) eines Übertragungsmoduls (10) einen 3R-Regenerator (16) aufweist, der mit dem Sender (1) des nächsten Übertragungsmoduls (10) verbunden ist.

2. Übertragungsmodul (10) nach Anspruch 1, dadurch gekennzeichnet, daß der Sender (1) mindestens einen Multiplexer (2) für das Senden und der Empfänger einen Demultiplexer (6) und optisch-elektrischen Wandler (15) zum Empfang von Wellenlängen-Multiplexsignalen enthält.

3. Übertragungsmodul (10) nach Anspruch 1, dadurch gekennzeichnet, daß der Sender (1) eine Vielzahl von elektro-optischen Wandlern (5) und einen Multiplexer (2) für das Senden und der Empfänger (8) einen Demultiplexer (6) und optisch-elektrischen Wandler (15) zum Empfang von Wellenlängen-Multiplexsignalen enthält.

4. Übertragungsmodul (10) nach Anspruch 1, dadurch gekennzeichnet, daß die Übertragungsstrecke (3) Faserstücke (7) mit positiven und negativen Dispersionseigenschaften enthält.

5. Übertragungsmodul (10) nach Anspruch 1, dadurch gekennzeichnet, daß über definierte Wellenlängen λ₁, λ₂ ein optischer Überwachungskanal (13) besteht, der Signalabzweige (14) nach jedem optischen Verstärker (4) aufweist.

6. Übertragungsmodul (10) nach Anspruch 1, dadurch gekennzeichnet, daß in aufeinanderfolgenden Abschnitten alternierende Wellenlängen λ₁, λ₂ zum Einsatz kommen.

7. Übertragungsmodul (10) nach Anspruch 1, dadurch gekennzeichnet, daß in dem letzten Empfänger (8) in der Kette der Übertragungsmodule (10) elektronische Filter (9) eingebaut sind.

8. Übertragungsmodul (10) nach Anspruch 1, dadurch gekennzeichnet, daß in dem letzten Empfänger(8) in der Keife der Übertragungsmodule (10) ein Eye-Monitoring System (11) eingebaut ist.

9. Übertragungsmodul (10) nach Anspruch 2, dadurch gekennzeichnet, daß vor dem Wellenlängen-Multiplexer (2) Kompensatoren (12a) für eine Vorverzerrung der jeweiligen Wellenlängenkanäle angebracht sind.

10. Übertragungsmodul (10) nach Anspruch 2, dadurch gekennzeichnet, daß vor dem Wellenlängen-Multiplexer (2) Kompensatoren (12a) für eine Vorverzerrung der jeweiligen Wellenlängenkanäle und nach dem Wellenlängen-Demultiplexer (6) Entzerrer (12b) angebracht sind.

11. Übertragungsmodul (10) nach Anspruch 1, dadurch gekennzeichnet, daß für die Übertragung ein DST (Dispersion Supported Transmission) - Verfahren eingesetzt wird.

12. Übertragungsmodul (10) nach Anspruch 11, dadurch gekennzeichnet, daß die Quellen für die unterschiedlichen Wellenlängenkanäle direkt modulierte Laser sind.

13. Übertragungsmodul (10) nach Anspruch 1, dadurch gekennzeichnet, daß die jeweils benachbarten Wellenlängenkanäle orthogonale Polarisation aufweisen.
